# EUROPÄISCHE PATENTSCHRIFT

(11) **EP 0 770 195 B1**
(45) Veröffentlichungstag und Bekanntmachung des Hinweises auf die Patenterteilung: **16.12.1998**
(21) Anmeldenummer: 95943149.5
(22) Anmeldetag: 08.07.1995
(51) Int. Cl.: F16H 61/06

(54) **VERFAHREN ZUM STEUERN EINES AUTOMATGETRIEBES**
PROCESS FOR CONTROLLING AN AUTOMATIC TRANSMISSION
PROCEDE DE COMMANDE D'UNE TRANSMISSION AUTOMATIQUE

(30) Priorität: 12.07.1994 DE 4424456
(43) Veröffentlichungstag der Anmeldung: 02.05.1997
(73) Patentinhaber: ZF FRIEDRICHSHAFEN Aktiengesellschaft, 88038 Friedrichshafen (DE)
(72) Erfinder: DOMIAN, Hans-Jörg, D-88090 Immenstaad (DE); DREIBHOLZ, Ralf, D-88074 Meckenbeuren (DE); FROTSCHER, Gerd, D-88048 Friedrichshafen (DE); SCHOBER, Thomas, D-88048 Friedrichshafen (DE)
(86) Internationale Anmeldenummer: EP9502658
(87) Internationale Veröffentlichungsnummer: WO9601961

(56) Entgegenhaltungen:
- EP-A- 0 435 378
- EP-A- 0 498 481
- WO-A-94/12814

## Beschreibung

Die Erfindung betrifft ein Verfahren zum Steuern eines Automatgetriebes nach dem Oberbegriff des Anspruches 1 bzw. Anspruches 10.

Als gattungsbildender Stand der Technik für den Anspruch 1 ist die WO-A-94 12814 anzusehen.

Aus der EP-OS 0 435 374 ist ein Verfahren zum Steuern eines Automatgetriebes bekannt, bei dem eine Schaltung von einem ersten in ein zweites Übersetzungsverhältnis erfolgt, indem eine erste Kupplung öffnet und eine zweite Kupplung schließt. Mit Beginn der Schaltung wird der Druck der ersten Kupplung abgesenkt, wobei die Kupplung nicht ins Rutschen gebracht wird. Der Verlauf einer Turbinendrehzahl legt den Abschaltpunkt der ersten Kupplung fest. Nach Auftreten des Abschaltpunktes wird der Kupplungsschlupf der zweiten Kupplung in Abhängigkeit einer Zeitfunktion gesteuert. Der Offenlegungsschrift ist nicht zu entnehmen, wie eine Lastübernahme der zweiten Kupplung von der ersten Kupplung ausgeführt ist.

Aus der EP-OS 0 565 111 ist ein Automatgetriebe in Gruppenbauweise bekannt, die als gattungsbildend für den Anspruch 10 anzusehen ist. Beide Getriebeteile enthalten Planetenradsätze und Freiläufe. Der erste und zweite Getriebeteil wird innerhalb der Gangfolge nur einmal geschaltet bei einer Hochschaltung von der zweiten in die dritte Gangstufe. Die Schaltrichtungen verlaufen hierbei in den beiden Getriebeteilen entgegengesetzt, d. h., im ersten Getriebeteil wird eine Hochschaltung und im zweiten Getriebeteil eine Rückschaltung ausgeführt. Nachteilig ist, daß eine Gruppenschaltung der beiden Getriebeteile nur bei einer Hochschaltung ausgeführt ist.

Es ist Aufgabe der Erfindung, ein Verfahren zum Steuern eines Automatgetriebes zu schaffen, welches insbesondere bei einem Gruppengetriebe anwendbar ist.

Die Aufgabe wird erfindungsgemäß gelöst, indem in einer ersten Schaltungsart die Schaltung aus einer Schnellfüll-, Füllausgleichs-, einer Lastübernahme-, einer Gradient-Einstell-, einer Gleit-, einer Gradient-Abbau- und einer Schließphase besteht. In einer zweiten Schaltungsart besteht die Schaltung aus einer Schnellfüll-, einer Füllausgleichs-, einer Gradient-Einstell-, einer Gleit-, einer Gradient-Abbau-, einer Lastübernahme- und einer Schließphase.
Unter der ersten Schaltungsart im Sinne der Erfindung ist eine Hochschaltung im Zug bzw. eine Rückschaltung im Schub zu verstehen.
Unter der zweiten Schaltungsart im Sinne der Erfindung ist eine Rückschaltung im Zug bzw. eine Hochschaltung im Schub zu verstehen.

Die erfindungsgemäße Lösung bietet den Vorteil, daß es sich um ein dynamisches Verfahren handelt. Dynamisch bedeutet, daß während der Schaltung die Auswahl und der Übergang von der ersten zur zweiten Kupplung automatisch und kontinuierlich erfolgt, wodurch ein stetiger Verlauf des Abtriebsmomentes unter allen Fahrbedingungen erzielt wird. Ein vom Fahrer über ein Fahrpedal vorgebbarer Leistungswunsch einer Brennkraftmaschine geht unmittelbar in die Schaltungsberechnung bzw. in die Bestimmung der Schaltungsart mit ein. Beginnt der Schaltübergang zum Beispiel als Rückschaltung im Zug, so wird unmittelbar, nachdem der Fahrer das Fahrpedal freigegeben hat, die Schaltungsart in der Form gewechselt, daß die Schaltung als Rückschaltung im Schub beendet wird.

In einer Ausgestaltung wird vorgeschlagen, daß in der ersten Schaltungsart während der Schnellfüllphase die zweite Kupplung mit hohem Druck beaufschlagt und der Druck der ersten Kupplung von einem ersten auf ein zweites Niveau abgesenkt wird, hierbei das zweite Niveau oberhalb der Rutschgrenze der ersten Kupplung liegt; in der Füllausgleichsphase die zweite Kupplung auf einem niederen Druckniveau pF befüllt wird und der Druck der ersten Kupplung auf dem zweiten Niveau verbleibt; in der Lastübernahmephase der Druck der zweiten Kupplung auf einen Endwert pEl = f (Kenngröße 1) erhöht wird und der Druck der ersten Kupplung vom zweiten Niveau auf Null abgesenkt wird; in der Gradient-Einstellphase der Druck der zweiten Kupplung vom Endwert pE1 auf einen Endwert pE2 = f (Kenngröße 2) erhöht wird; in der Gleitphase der Druck der zweiten Kupplung linear erhöht wird, bis an dieser ein Vorsynchronpunkt erkannt wird; in der Gradient-Abbauphase der Druck der zweiten Kupplung auf einen Endwert pE3 = f (Kenngröße 3) verringert wird; mit Erreichen des Endwertes pE3 die Schließphase beginnt.

In einer Ausgestaltung wird vorgeschlagen, daß in der zweiten Schaltungsart während der Schnellfüllphase die zweite Kupplung mit hohem Druck beaufschlagt und der Druck der ersten Kupplung von einem ersten auf ein zweites Niveau abgesenkt wird, hierbei das zweite Niveau oberhalb der Rutschgrenze der ersten Kupplung liegt; in der Füllausgleichsphase die zweite Kupplung auf einem niederen Druckniveau pF befüllt wird und der Druck der ersten Kupplung auf dem zweiten Niveau verbleibt; in der Gradient-Einstellphase der Druck der ersten Kupplung auf einen Endwert pE4 = f (Kenngröße 2) verringert wird; in der Gleitphase der Druck der ersten Kupplung rampenförmig erhöht wird, bis an dieser ein Vorsynchronpunkt erkannt wird; in der Gradient-Abbauphase der Druck der ersten Kupplung vom Rampenendwert auf einen Endwert pE5 = f (Kenngröße 1) erhöht wird; in der Lastübernahmephase der Druck der ersten Kupplung vom Endwert pE5 auf Null reduziert und der Druck der zweiten Kupplung vom Druckniveau pF auf den Endwert pE5 erhöht wird und mit Erreichen des Endwertes pE5 die Schließphase beginnt.

In einer Ausgestaltung zu den beiden vorher beschriebenen Ausgestaltungen wird vorgeschlagen, daß die Kenngröße 3 festgelegt ist durch eine Zeitstufe für den Übergang vom Differenzdrehzahl-Gradient am Vorsynchronpunkt zum Differenzdrehzahl-Gradient am Synchronpunkt, wobei der Differenzdrehzahl-Gradient und die Differenzdrehzahl am Synchronpunkt Null sind. Hierdurch wird der Vorteil erzielt, daß gegen Ende der Schaltung der zuvor aufgebaute Differenzdrehzahl-Gradient wieder kontinuierlich abgebaut wird, so daß der Übergang zum Synchronpunkt des zweiten Übersetzungsverhältnisses ruckfrei abläuft. Hierbei fallen der Synchronpunkt der zweiten Kupplung und der vollständige Gradienten-Abbau zeitlich zusammen.

In einer weiteren Ausgestaltung wird vorgeschlagen, daß eine Zug-/Schub-Unterscheidung aufgrund des Vorzeichens der Summe aus aktuellem statischen und aktuellem dynamischen Moment erfolgt. Hierdurch wird der Vorteil erzielt, daß zum Beispiel bei einer Hochschaltung mit kleiner Drosselklappenstellung und hohem Drehzahlsprung der Brennkraftmaschine der Einfluß der Brennkraftmaschine als Energiespeicher mitberücksichtigt wird.

Um das Verfahren bei einem Gruppengetriebe zu verwenden, wird erfindungsgemäß weiter vorgeschlagen, daß das Automatgetriebe im ersten und zweiten Getriebeteil gleichzeitig geschaltet wird, wobei die Schaltungsvorgänge nach Anspruch 1 ausgeführt werden.

In einer Ausgestaltung hierzu wird vorgeschlagen, daß die Kenngröße 2 sich aus einer vorzeichenrichtigen Summe des aktuellen statischen Moments, eines dynamischen Moments des ersten Getriebeteils, dieses sich aus einer getriebeeingangsseitigen Differenzdrehzahl, einer Sollschaltzeit der Brennkraftmaschine und einem ersten Massenfaktor berechnet und einem dynamischen Moment des zweiten Getriebeteils, wobei sich dieses aus der Differenzdrehzahl des zweiten Getriebeteils, einer Sollschaltzeit des zweiten Getriebeteils und einem zweiten Massenfaktor berechnet.

In einer weiteren Ausgestaltung wird vorgeschlagen, daß mit Erkennen des Vorsynchronpunktes im zweiten Getriebeteil die Berechnung der Kenngröße 2 in die Berechnung der Kenngröße 2 gemäß Anspruch 4 für den ersten Getriebeteil übergeht.

In der Zeichnung ist ein Ausführungsbeispiel dargestellt.
Es zeigen:
- Fig. 1: ein Zustandsdiagramm;
- Fig. 2: ein Zeitdiagramm einer Schaltung der ersten Schaltungsart;
- Fig. 3: ein Zeitdiagramm einer Schaltung der zweiten Schaltungsart;
- Fig. 4: ein Blockdiagramm und
- Fig. 5: ein Zustandsdiagramm Gruppengetriebe.

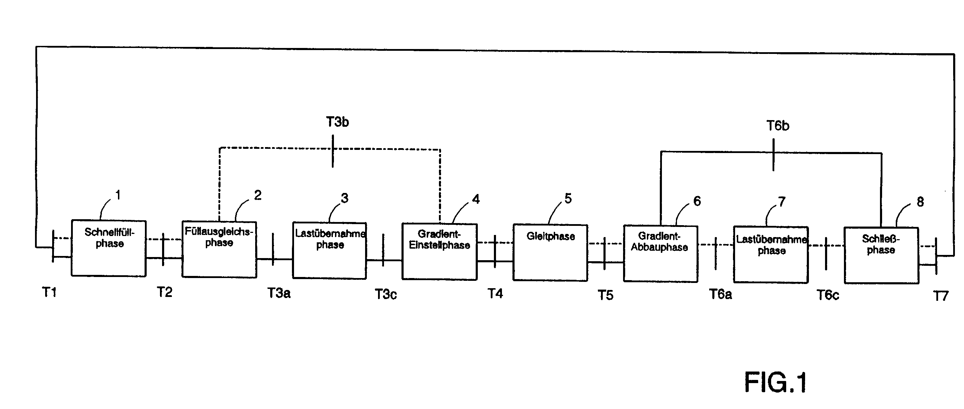

Fig. 1 zeigt ein Zustandsdiagramm, bestehend aus Schnellfüllphase 1, Füllausgleichsphase 2, Lastübernahmephase 3, Gradient-Einstellphase 4, Gleitphase 5, Gradient-Abbauphase 6, Lastübernahmephase 7 und Schließphase 8. Die durchgezogene Linie entspricht hierbei dem Ablauf einer Schaltung der ersten Schaltungsart. Unter einer Schaltung der ersten Schaltungsart ist eine Hochschaltung im Zug bzw. eine Rückschaltung im Schub zu verstehen. Die strichpunktierte Linie entspricht einem Ablauf für eine Schaltung der zweiten Schaltungsart. Unter zweiter Schaltungsart ist eine Rückschaltung im Zug bzw. eine Hochschaltung im Schub zu verstehen. Ein Ablauf gemäß des Zustandsdiagrammes wird für jede der beiden an der Schaltung beteiligten Kupplungen ausgeführt. Der Übergang von einer Phase in eine andere ist abhängig vom Auftreten definierter Ereignisse bzw. Bedingungen, nachfolgend Transition genannt.

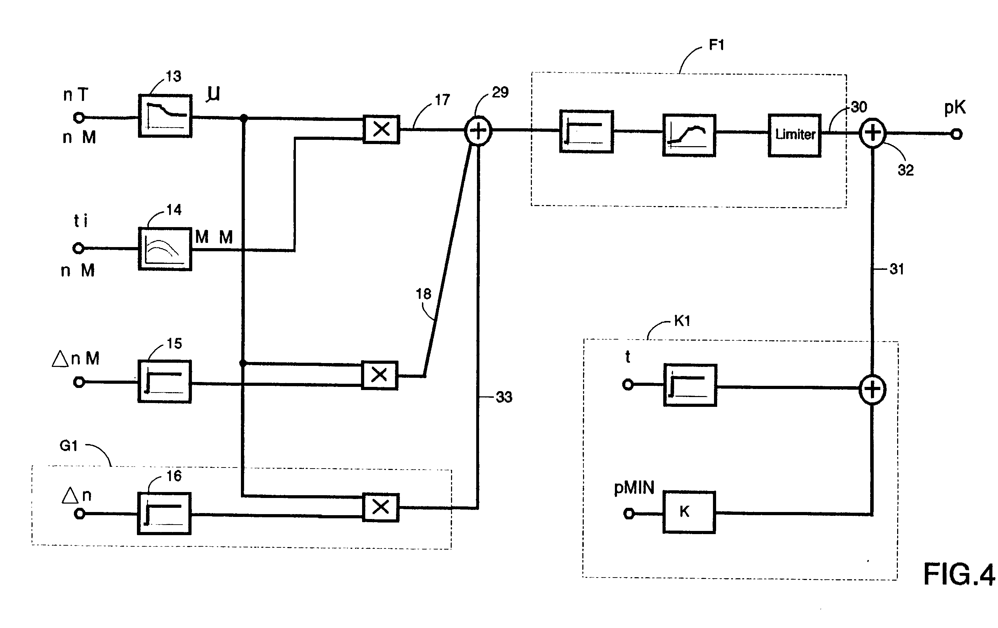

Für eine Schaltung der ersten Schaltungsart ergibt sich für die zweite Kupplung folgender Ablauf:
Transition T1, ein elektronisches Steuergerät erkennt aufgrund von Eingangssignalen eine Schaltungsanforderung und gibt einen Schaltbefehl aus. Es folgt die Schnellfüllphase 1. Während der Schnellfüllphase 1 wird die zweite Kupplung mit hohem Druck, dem Schnellfülldruck, beaufschlagt. Bei Transition T2 wird geprüft, ob eine Zeitstufe, die die Dauer des Schnellfülldruckes steuert, abgelaufen ist. Danach folgt die Füllausgleichsphase 2. In der Füllausgleichsphase 2 wird die zweite Kupplung mit Druckmedium befüllt. Die zweite Kupplung überträgt noch kein Moment. Bei Transition T3a wird geprüft, ob eine Zeitstufe, die die Dauer des Füllausgleiches steuert, abgelaufen ist. Danach folgt die Lastübernahmephase 3. In der Lastübernahmephase 3 wird der Druck in der zweiten Kupplung vom Füllausgleichsniveau auf einen Endwert pEl = f (Kenngröße 1) erhöht. Die Kenngröße 1 entspricht einem statischen Moment, welches wiederum eine Funktion des aktuellen, von der Brennkraftmaschine abgegebenen Moments mal einem Wandlungsverhältnis entspricht. Bei Verwendung eines Automatgetriebes ohne hydrodynamischen Wandler entspricht das statische Moment dem aktuellen, von der Brennkraftmaschine abgegebenen Moment. Transition T3c ist dann erfüllt, wenn das Moment an der zweiten Kupplung dem statischen Moment entspricht.
Danach folgt die Gradient-Einstellphase 4. In der Gradient-Einstellphase 4 wird der Druck der zweiten Kupplung vom Endwert pE1 auf einen Endwert pE2 erhöht. Der Endwert pE2 ist eine Funktion einer Kenngröße 2. In der Kenngröße 2 ist ein dynamisches Moment enthalten. Die Berechnung der Kenngröße 2 wird in Verbindung mit Fig. 4 erklärt. Bei Transition T4 wird geprüft, ob eine Zeitstufe abgelaufen ist. Danach folgt die Gleitphase 5.
Bei Transition T5 wird geprüft, ob ein Vorsynchronpunkt erreicht ist. Der Vorsynchronpunkt wird aus einem Differenzdrehzahl-Gradient der zweiten Kupplung, dem aktuellen Differenzdrehzahlwert der zweiten Kupplung und einer Zeitstufe, bestimmt. Danach folgt die Gradient-Abbauphase 6. In der Gradient-Abbauphase wird der Druck auf einen Endwert pE3 = f (Kenngröße 3) verringert. Die Kennröße 3 ist festgelegt durch eine Zeitstufe für den Übergang vom Differendrehzahl-Gradient am Vorsynchronpunkt zum Differenzdrehzahl-Gradient am Synchronpunkt. Der Differenzdrehzahl-Gradient und die Differenzdrehzahl am Synchronpunkt der zweiten Kupplung sind Null. Während dieser Phase wird das zuvor aufgebaute dynamische Moment wieder abgebaut. Bei Transition T6b wird geprüft, ob der Druck aus dem dynamischen Moment abgebaut bzw. ob die Synchrondrehzahl erreicht ist. Danach folgt die Schließphase 8. Während der Schließphase 8 wird der Druck an der zweiten Kupplung rampenförmig erhöht, bis der Absolutwert der Differenzdrehzahl der zweiten Kupplung innerhalb einer dritten Zeitstufe kleiner einem Sollwert ist. Ist diese Bedingung erfüllt, so wird die zweite Kupplung mit Hauptdruck beaufschlagt. Bei Transition T7 wird geprüft, ob ein Haften der zweiten Kupplung erkannt ist. Danach beginnt das Zustandsdiagramm wieder bei T1.

Eine Schaltung der zweiten Schaltungsart besteht aus einer Schnellfüll- 1, einer Füllausgleichs- 2, einer Gradient-Einstell- 4, einer Gleit- 5, einer Gradient-Abbau- 6, einer Lastübernahme- 7 und einer Schließphase 8.
Die Funktionsblöcke wurden bereits zuvor beschrieben, so daß auf eine nochmalige Beschreibung verzichtet wird. Ergänzend kommen die Transitionen T3b, T6a und T6c hinzu. Bei T3b wird für die erste Kupplung geprüft, ob eine Zeitstufe für den Füllausgleich abgelaufen ist. Bei Transition T6a wird für die erste Kupplung geprüft, ob der Druck aus dem dynamischen Moment abgebaut ist und bei Transition T6c, ob eine Zeitstufe abgelaufen ist.

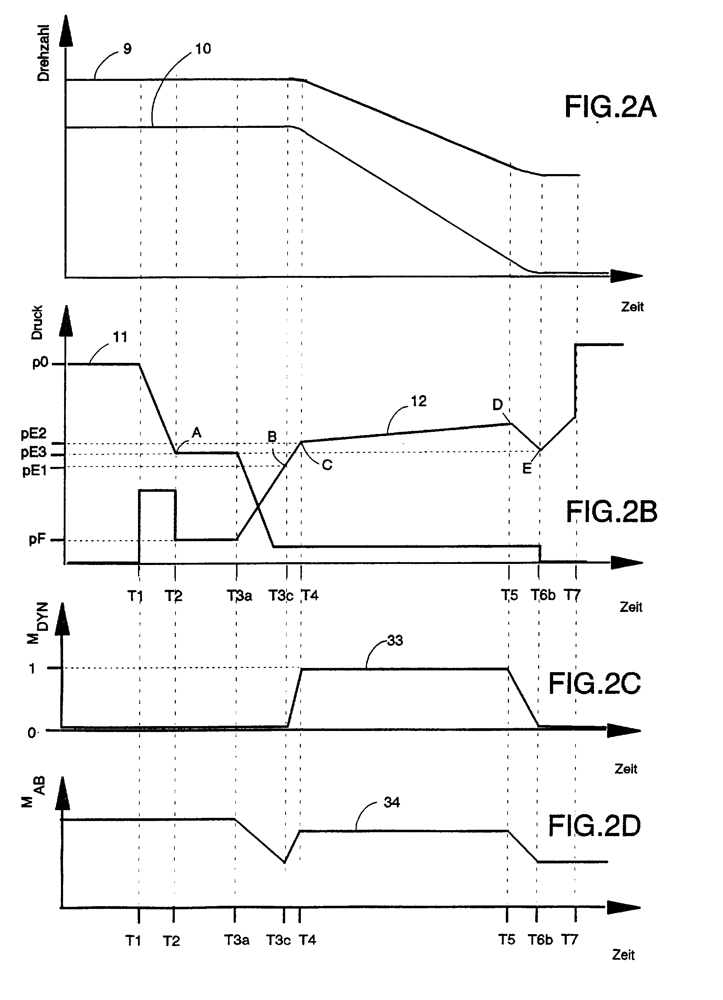

Fig. 2A bis 2D zeigen einen Drehzahl- und einen Druckverlauf für eine Schaltung der ersten Schaltungsart und die dazugehörigen Verläufe des dynamischen Moments 33 (Fig. 2C) und Getriebeausgangsmoment 34 (Fig. 2D).
Fig. 2B zeigt den Druckverlauf über der Zeit für die erste Kupplung 11 und die zweite Kupplung 12. Der aus diesen Druckverläufen resultierende Drehzahlverlauf einer Brennkraftmaschine 9 und der Differenzdrehzahlverlauf 10 der zweiten Kupplung über der Zeit sind in Fig. 2A dargestellt. Auf der Abszisse dargestellte Werte von T entsprechen den Transitionen aus Fig. 1.
Bei T1 gibt ein elektronisches Steuergerät den Schaltbefehl aus. Gleichzeitig wird der Druck der ersten Kupplung 11 von einem Anfangswert p0 auf einen Druckwert des Punktes A reduziert. Das Druckniveau des Punktes A liegt oberhalb der Rutschgrenze der ersten Kupplung 11. Ebenfalls bei Transition T1 wird die zweite Kupplung 12 mit hohem Druck, dem Schnellfülldruck, beaufschlagt. Dies entspricht der Schnellfüllphase aus Fig. 1. Transition T2, die Zeitstufe für die Schnellfüllphase, ist abgelaufen, es beginnt für die zweite Kupplung 12 die Füllausgleichsphase, bis die Transition T3a erfüllt ist. Während der Füllausgleichsphase, Druckniveau pF, wird die zweite Kupplung mit Druckmedium befüllt, sie überträgt noch kein Moment. Das Druckniveau der ersten Kupplung bleibt während der Füllausgleichsphase der zweiten Kupplung konstant. Bei Transition T3a wird geprüft, ob eine Zeitstufe für den Füllausgleich abgelaufen ist. Ist die Bedingung erfüllt, so beginnt für die zweite Kupplung 12 die Lastübernahmephase. Die Lastübernahmephase endet, wenn der Druck in der zweiten Kupplung 12 das Druckniveau des Punktes B, Druckendwert pEl, erreicht hat. Das Druckniveau des Punktes B wird so gewählt, daß die zweite Kupplung ein statisches Moment übertragen kann. Das statische Moment berechnet sich aus dem von der Brennkraftmaschine aktuell abgegebenen Moment mal einem Wandlungsverhältnis, wenn im Automatgetriebe ein hydrodynamischer Wandler in Funktion ist. Das von der Brennkraftmaschine aktuell abgegebene Moment kann direkt erfaßt oder bekanntermaßen aus einer Drehzahl der Brennkraftmaschine und einer Einspritzzeit bzw. Stellung einer Drosselklappe berechnet werden. Am Punkt B tritt noch keine Veränderung der Drehzahl der Brennkraftmaschine bzw. Differenzdrehzahl der zweiten Kupplung auf.
Während der Lastübernahmephase wird der Druck der ersten Kupplung 11 vom Druckniveau des Punktes A auf Null reduziert. Bei Transition T3c wird geprüft, ob das Moment der zweiten Kupplung 12 dem statischen Moment entspricht. Danach wird der Druck erhöht bis auf ein Druckniveau des Punktes C, Druckendwert pE2. Das Druckniveau des Punktes C wird anhand einer Kenngröße 2 berechnet. Für die Berechnung der Kenngröße 2 wird auf die Fig. 4 verwiesen. In die Berechnung der Kenngröße 2 geht das dynamische Moment mit ein. Das dynamische Moment ist eine Funktion einer SollSchaltzeit, einer getriebeeingangsseitig bezogenen Schwungmasse und einer Differenzdrehzahl. Die Differenzdrehzahl berechnet sich aus dem Verhältnis der ersten und zweiten Übersetzung mal der Getriebeausgangsdrehzahl. Über die Druckdifferenz von Punkt B zu Punkt C bzw. Druckendwert pEl zu pE2 wird der Gradient der Drehzahl der Brennkraftmaschine 9 bzw. der Gradient der Differenzdrehzahl der zweiten Kupplung 10 gesteuert. Wie aus Fig. 2C ersichtlich, erhöht sich das dynamische Moment gleichzeitig von seinem Anfangswert Null auf den Endwert Eins, entsprechend 100 %. Bei Transition T4 beginnt für die zweite Kupplung die Gleitphase bis zur Transition T5. Während der Gleitphase wird der Druck der zweiten Kupplung linear erhöht. Während der Gleitphase kann die Belastung der zweiten Kupplung reduziert werden, indem das von der Brennkraftmaschine abgegebene Moment verringert wird, zum Beispiel mittels Zündeingriff oder Verringerung der Einspritzmenge. Transition T5 ist erfüllt, wenn ein Vorsynchronpunkt erkannt wird. Dieser wird bestimmt aus einem Differenzdrehzahl-Gradient der zweiten Kupplung, dem aktuellen Differenzdrehzahl-Wert der zweiten Kupplung und einer Zeitstufe. Über die Zeitstufe werden zum Beispiel Verzögerungszeiten der Hydraulik mitberücksichtigt. Durch die Verwendung des Differenzdrehzahl-Gradienten der zweiten Kupplung werden die Fälle mitberücksichtigt, bei denen eine Veränderung der Drehzahl der Brennkraftmaschine von einem hohen Niveau auf ein niederes Niveau erfolgt. Der Differenzdrehzahl-Gradient der zweiten Kupplung berechnet sich aus dem Drehzahlunterschied der beiden Kupplungshälften und deren Veränderung über der Zeit.
Mit Erkennen des Vorsynchronpunktes wird der Druck der zweiten Kupplung 12 im Punkt D auf einen neuen Druckwert des Punktes E, Druckendwert pE3, reduziert. Durch die Druckverringerung von Punkt D zu Punkt E der zweiten Kupplung 12 wird das zuvor aufgebaute dynamische Moment wieder reduziert. Hierdurch verändert sich der Gradient der Drehzahl der Brennkraftmaschine 9 und die Differenzdrehzahl 10 der zweiten Kupplung derart, daß beide in Richtung einer Waagerechten übergehen. Dies bedeutet in der Praxis einen weichen und ruckfreien Übergang am Synchronpunkt des zweiten Übersetzungsverhältnisses.
Transition T6b ist dann erfüllt, wenn der dynamische Druck abgebaut bzw. die Synchrondrehzahl des zweiten Übersetzungsverhältnisses erreicht ist. Nach der Transition T6b beginnt die Schließphase, während der der Druck der zweiten Kupplung rampenförmig erhöht wird, bis der Absolutwert der Differenzdrehzahl der zweiten Kupplung innerhalb einer dritten Zeitstufe kleiner einem Sollwert ist. Danach wird die Kupplung mit Hauptdruck beaufschlagt, da diese vollständig geschlossen ist, Transition T7.

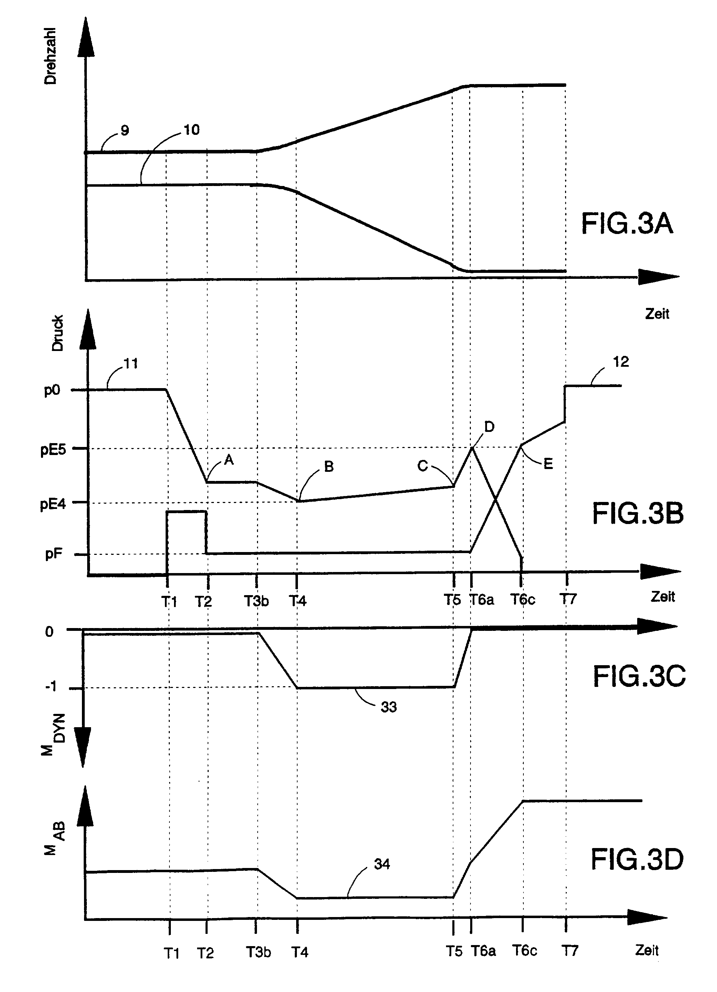

Fig. 3A bis 3D zeigen den Drehzahlverlauf der Brennkraftmaschine 9, die Differenzdrehzahl 10 der zweiten Kupplung 12, den Druckverlauf der ersten Kupplung 11 und den Druckverlauf der zweiten Kupplung 12 für eine Schaltung der zweiten Schaltungsart und die dazugehörigen Verläufe des dynamischen Moments 33 (Fig. 3C) und Getriebeausgangsmoment 34 (Fig. 3D). Unter zweiter Schaltungsart ist eine Rückschaltung im Zug bzw. eine Hochschaltung im Schub zu verstehen. Die auf der Abszisse der Fig. 3B bzw. 3D abgetragenen Werte von T entsprechen den Transitionen der Fig. 1.
Mit Ausgabe des Schaltbefehls, Transition T1, wird der Druck der ersten Kupplung von einem Anfangsniveau P0 reduziert auf ein Druckniveau des Punktes A. Dieses liegt oberhalb der Rutschgrenze der ersten Kupplung. Gleichzeitig wird die zweite Kupplung mit einem hohen Druck, dem Schnellfülldruck, beaufschlagt. Nachdem eine Zeitstufe für den Schnellfülldruck abgelaufen ist, Transition T2, beginnt für die zweite Kupplung 12 die Füllausgleichsphase, Druckniveau pF, bis zur Transition T6a. Der Druck der ersten Kupplung 11 wird während der Füllausgleichsphase konstant gehalten. Bei Transition T3b ist eine Zeitstufe für den Füllausgleich der ersten Kupplung 11 abgelaufen. Danach beginnt die Gradient-Einstellphase der ersten Kupplung 11. Während dieser wird der Druck der ersten Kupplung 11 vom Druckwert Punkt A auf das Druckniveau des Punktes B, Druckendwert pE4, reduziert. Dadurch verändert sich der Drehzahlverlauf 9 der Brennkraftmaschine in Richtung größere Drehzahlwerte, bzw. der Differenz-Drehzahlverlauf der zweiten Kupplung 12 verringert sich. Gleichzeitig vermindert sich der Verlauf des dynamischen Moments 33 vom Anfangswert Null auf den Endwert minus Eins, entsprechend minus 100 %.
Bei Transition T4 beginnt für die erste Kupplung 11 die Gleitphase. Während der Gleitphase wird der Druck der ersten Kupplung 11 linear erhöht bis zum Druckniveau des Punktes C. Transition T5 ist dann erfüllt, wenn ein Vorsynchronpunkt erreicht ist. Die Definition des Vorsynchronpunktes entspricht der aus Fig. 2. Bei Transition T5 wird der Druck der ersten Kupplung 11 bis auf einen Endwert pE5, Punkt D, erhöht. Dies entspricht der Gradient-Abbauphase der ersten Kupplung 11. Über die Gradient-Abbauphase wird ein weicher und ruckfreier Übergang in den Synchronpunkt des zweiten Übersetzungsverhältnisses erzielt. Während der Gradient-Abbauphase wird das dynamische Moment der ersten Kupplung 11 abgebaut. Ist dies der Fall, so ist Transition T6a erfüllt. Mit Erfüllen dieser Bedingung wird die erste Kupplung 11 vollständig geöffnet, d. h., das Druckniveau geht vom Punkt D auf Null zurück. Gleichzeitig beginnt der Druckaufbau der zweiten Kupplung 12 bis zum Endwert pE5, Punkt E. Dies entspricht der Lastübernahmephase der zweiten Kupplung 12. Das Druckniveau des Punktes E ist eine Funktion des statischen Momentes. Transition T6c prüft, ob die Lastübernahmephase beendet ist. Danach beginnt die Schließphase der zweiten Kupplung 12.

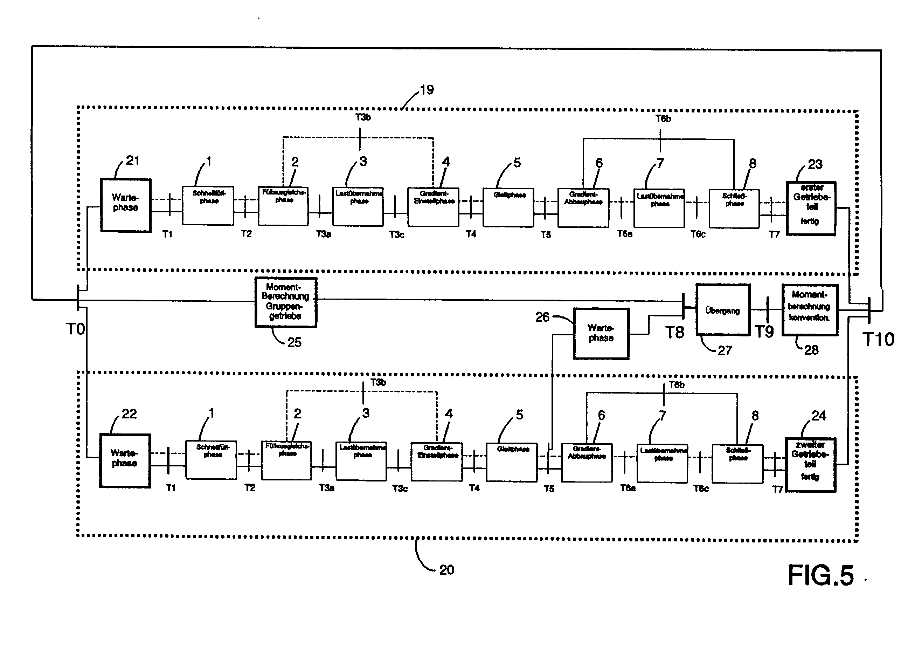

Fig. 4 zeigt ein Blockdiagramm zur Berechnung des Kupplungsdruckes der ersten Kupplung 11 bzw. zweiten Kupplung 12. Die Berechnung des Kupplungsdruckes wird für jede Kupplung ausgeführt. Der Kupplungsdruck berechnet sich aus einer Kenngröße 1, dies entspricht dem statischen Moment 17, einem dynamischen Moment 18, einem Faktor F1 und einer Konstante K1. Weiterhin enthält die Fig. 4 einen Funktionsblock G1, der allerdings nur in Verbindung mit einem Gruppengetriebe ausgeführt ist, siehe Fig. 5. Das statische Moment 17 berechnet sich aus dem von einer Brennkraftmaschine abgegebenen aktuellen Moment und einem Wandlungsverhältnis. Das von der Brennkraftmaschine aktuell abgegebene Moment kann, wie in Fig. 4 ausgeführt, aus den beiden Eingangsgrößen Drehzahl der Brennkraftmaschine und Einspritzzeit über ein Motorkennfeld 14 berechnet werden. Daneben kann das Motormoment ebenso als echter Wert vorliegen. Das Wandlungsverhältnis, Funktionsblock 13, berechnet sich aus einem Drehzahlverhältnis von Drehzahl der Brennkraftmaschine zur Drehzahl einer Turbinenwelle. Bekanntermaßen besteht ein hydrodynamischer Wandler aus einem Pumpenrad, einem Turbinenrad und einem Leitrad. Die Drehzahl des Pumpenrades entspricht der Drehzahl der Brennkraftmaschine. Wird beim Automatgetriebe kein hydrodynamischer Wandler verwendet, so wird das Wandlungsverhältnis mit Eins festgelegt.
Das dynamische Moment 18 berechnet sich aus dem Wandlungsverhältnis, Funktionsblock 13, mal der Ausgangsgröße des Kennfeldes 15. Das Kennfeld 15 beinhaltet eine Soll-Schaltzeit, eine getriebeeingangsseitig bezogene Schwungmasse und eine Differenzdrehzahl. Die Differenzdrehzahl wiederum entspricht dem Verhältnis der ersten und zweiten Übersetzung mal der Getriebeausgangsdrehzahl. Die getriebeeingangsseitig bezogene Schwungmasse ist bei Getrieben in Vorgelegebauweise konstant, bei Umlaufgetrieben schaltungsabhängig. Das statische Moment 17 und das dynamische Moment 18 werden vorzeichenrichtig addiert, Summationspunkt 29. Die Summe der beiden Momente wird über einen Faktor F1 gewichtet. Der Faktor F1 enthält Korrekturkennlinien für einen momentenabhängigen Reibwert, eine Schaltelementkonstante und einen Begrenzer. Ausgangsgröße des Faktors F1 ist ein Druckwert 30. Am Summationspunkt 32 werden der Druckwert 30 und der Druckwert 31 addiert. Der Druckwert 31 ist Ausgangsgröße einer Konstanten Kl, welche sich zusammensetzt aus einer Mindestdruckvorgabe und zeitabhängigen Druckanteilen. Ausgangsgröße des Summationspunktes 32 ist der Kupplungsdruck pK für die jeweilige Kupplung.

Fig. 5 zeigt ein Zustandsdiagramm für ein Gruppengetriebe. Das Zustandsdiagramm zeigt einen ersten Getriebeteil 19 und einen zweiten Getriebeteil 20. Eine Schaltung von einem ersten in ein zweites Übersetzungsverhältnis erfolgt bei dem Gruppengetriebe, in dem die Schaltrichtungen der einzelnen Getriebeteile entgegengesetzt verlaufen. Soll zum Beispiel das Gruppengetriebe eine Hochschaltung ausführen, so erfolgt im ersten Getriebeteil eine Hochschaltung mit einem großen Übersetzungssprung, während der zweite Getriebeteil eine Rückschaltung mit einem kleinen Übersetzungssprung ausführt. Sowohl im ersten als auch im zweiten Getriebeteil werden die Schaltungen ausgeführt, indem eine erste Kupplung öffnet und eine zweite Kupplung schließt. Das Zustandsdiagramm zeigt für jeden Getriebeteil eine Schnellfüllphase 1, eine Füllausgleichsphase 2, eine Lastübernahmephase 3, Gradient-Einstellphase 4, Gleitphase 5, Gradient-Abbauphase 6, Lastübernahmephase 7 und Schließphase 8. Inhalt der einzelnen Phasen und Transitionen sind identisch mit der Beschreibung aus Fig. 1. Ergänzend sowohl für den ersten als auch zweiten Getriebeteil kommen hinzu: eine Wartephase 21 bzw. 22 und ein Schaltungsende 23, erster Getriebeteil fertig, bzw. Schaltungsende 24, zweiter Getriebeteil fertig. Ebenfalls ergänzend kommen hinzu: eine Momentberechnung Gruppengetriebe 25, eine Wartephase 26, ein Übergang 27 und eine Schaltmomentberechnung 28 (konventionell).
Die Wartephasen 21 bzw. 22 dienen dazu, unterschiedliche Zeiten für die Schnellfüllung und für den Füllausgleich im ersten und zweiten Getriebeteil auszugleichen. Daneben läßt sich durch die beiden Wartephasen 21 und 22 steuern, ob die gleiche Phase im ersten und zweiten Getriebeteil gleichzeitig oder um eine vorgebbare Zeit verschoben eintreten.
In der Momentberechnung Gruppengetriebe 25 werden die Kupplungsdrücke der vier an der Schaltung beteiligten Kupplungen berechnet. Die Berechnung des statischen Moments erfolgt, wie in Fig. 4 beschrieben. Die Kenngröße 2 berechnet sich aus der vorzeichenrichtigen Summe des aktuellen statischen Moments 17, eines dynamischen Moments 18 des ersten Getriebeteils und eines dynamischen Moments 33 des zweiten Getriebeteils. Das dynamische Moment 18 des ersten Getriebeteils berechnet sich aus der getriebeeingangsseitigen Differenzdrehzahl, einer Sollschaltzeit der Brennkraftmaschine und einem ersten Massenfaktor. Das dynamische Moment 33 des zweiten Getriebeteils wiederum berechnet sich aus einer Sollschaltzeit des zweiten Getriebeteils, der Differenzdrehzahl des zweiten Getriebeteils und einem zweiten Massenfaktor. Die Berechnung des dynamischen Moments 33 des zweiten Getriebeteils ist in Fig. 4 als Funktionsblock G1 dargestellt.
Die Wartephase 26 beginnt, nachdem im zweiten Getriebeteil die Vorsynchrondrehzahl eingetreten ist und endet mit Ablauf einer Zeitstufe, dies entspricht der Transition T8. Beim Übergang 27 wird die Momentberechnung für den ersten Getriebeteil kontinuierlich in einer vorgebbaren Zeit in die konventionelle Momentberechnung, wie in Fig. 4 beschrieben, übergeführt. Bei Transition T9 wird geprüft, ob die Zeitstufe, die den Übergang steuert, abgelaufen ist. Die Schaltmomentberechnung 28 (konventionell) entspricht der Momentberechnung, wie in Fig. 4 ausgeführt.

### Bezugszeichen

- 1: Schnellfüllphase
- 2: Füllausgleichsphase
- 3: Lastübernahmephase
- 4: Gradient-Einstellphase
- 5: Gleitphase
- 6: Gradient-Abbauphase
- 7: Lastübernahmephase
- 8: Schließphase
- 9: Drehzahl Brennkraftmaschine
- 10: Differenzdrehzahl zweite Kupplung
- 11: erste Kupplung
- 12: zweite Kupplung
- 13: Funktionsblock
- 14: Motorkennfeld
- 15: Kennfeld
- 16: Kennfeld
- 17: statisches Moment
- 18: dynamisches Moment
- 19: erster Getriebeteil
- 20: zweiter Getriebeteil
- 21: Wartephase
- 22: Wartephase
- 23: Schaltungsende, erster Getriebeteil fertig
- 24: Schaltungsende, zweiter Getriebeteil fertig
- 25: Momentberechnung Gruppengetriebe
- 26: Wartephase
- 27: Übergang
- 28: Schaltmomentberechnung, konventionell
- 29: Summationspunkt
- 30: Druckwert
- 31: Druckwert
- 32: Summationspunkt
- 33: dynamisches Moment
- 34: Getriebeausgangsmoment

## Patentansprüche

1. Verfahren zum Steuern eines von einer Brennkraftmaschine angetriebenen Automatgetriebes, bei dem eine Schaltung von einem ersten in ein zweites Übersetzungverhältnis erfolgt, indem eine erste Kupplung (11) öffnet und eine zweite Kupplung (12) schließt, hierbei ein elektronisches Steuergerät über elektromagnetische Ventile den Druckverlauf der ersten (11) und zweiten Kupplung (12) während des Schaltvorgangs steuert, das elektronische Steuergerät aufgrund von Eingangsgrößen eine erste oder zweite Schaltungsart bestimmt, die erste Schaltungsart eine Hochschaltung im Zug bzw. eine Rückschaltung im Schub ist und die zweite Schaltungsart eine Rückschaltung im Zug bzw. eine Hochschaltung im Schub ist, wobei die Schaltungsvorgänge in beiden Schaltungsarten derart ausgeführt werden, daß sich einer Schnellfüllphase eine Füllausgleichsphase anschließt und daran eine Lastübernahme- und Schließphase folgt, dadurch **gekennzeichnet**, daß in der ersten Schaltungsart der Lastübernahmephase (3) eine Gradient-Einstellphase (4) mit Gleitphase (5) folgt und vor der Schließphase (8) eine Gradient-Abbauphase (6) kcmmt, in der zweiten Schaltungsart der Füllausgleichsphase (2) eine Gradient-Einstellphase (4) mit Gleitphase (5) folgt und vor der Lastübernahmephase (7) eine Gradient-Abbauphase (6) kommt.

2. Verfahren nach Anspruch 1, dadurch **gekennzeichnet**, daß in der ersten Schaltungsart während der Schnellfüllphase (1) die zweite Kupplung (12) mit hohem Druck beaufschlagt und der Druck der ersten Kupplung (11) von einem ersten auf ein zweites Niveau abgesenkt wird, hierbei das zweite Niveau oberhalb der Rutschgrenze der ersten Kupplung (11) liegt, in der Füllausgleichsphase (2) die zweite Kupplung (12) auf einem niederen Druckniveau pF befüllt wird und der Druck der ersten Kupplung (11) auf dem zweiten Niveau verbleibt, in der Lastübernahmephase (3) der Druck der zweiten Kupplung (12) auf einen Endwert pEl = f (Kenngröße 1) erhöht wird und der Druck der ersten Kupplung (11) vom zweiten Niveau auf Null abgesenkt wird, in der Gradient-Einstellphase (4) der Druck der zweiten Kupplung (12) vom Endwert pE1 auf einen Endwert pE2 = f (Kenngröße 2) erhöht wird, in der Gleitphase (5) der Druck der zweiten Kupplung (12) linear erhöht wird, bis an dieser ein Vorsynchronpunkt erkannt wird, in der Gradient-Abbauphase (6) der Druck der zweiten Kupplung (12) auf einen Endwert pE3 = f (Kenngröße 3) verringert wird, mit Erreichen des Endwertes pE3 die Schließphase (8) beginnt.

3. Verfahren nach Anspruch 1, dadurch **gekennzeichnet**, daß in der zweiten Schaltungsart während der Schnellfüllphase (1) die zweite Kupplung (12) mit hohem Druck beaufschlagt und der Druck der ersten Kupplung (11) von einem ersten auf ein zweites Niveau abgesenkt wird, hierbei das zweite Niveau oberhalb der Rutschgrenze der ersten Kupplung (11) liegt, in der Füllausgleichs_ phase (2) die zweite Kupplung (12) auf einem niederen Druckniveau pF befüllt wird und der Druck der ersten Kupplung (11) auf dem zweiten Niveau verbleibt, in der Gradient-Einstellphase (4) der Druck der ersten Kupplung (11) auf einen Endwert pE4 = f (Kenngröße 2) verringert wird, in der Gleitphase (5) der Druck der ersten Kupplung (11) rampenförmig erhöht wird, bis an dieser ein Vorsynchronpunkt erkannt wird, in der Gradient-Abbauphase (6) der Druck der ersten Kupplung (11) vom Rampenendwert auf einen Endwert pE5 = f (Kenngröße 1) erhöht wird, in der Lastübernahmephase (7) der Druck der ersten Kupplung (11) vom Endwert pE5 auf Null reduziert und der Druck der zweiten Kupplung (12) vom Druckniveau pF auf den Endwert pE5 erhöht wird und mit Erreichen des Endwertes pE5 die Schließphase (8) beginnt.

4. Verfahren nach Anspruch 2 oder 3, dadurch **gekennzeichnet**, daß die Kenngröße 1 festgelegt wird aus einem statischen Moment (17), dieses eine Funktion des aktuellen, von der Brennkraftmaschine abgegebenen Moments mal einem Wandlungsverhältnis, wenn ein im Automatgetriebe enthaltener hydrodynamischer Wandler in Funktion ist, die Kenngröße 2 berechnet wird aus der Summe des aktuellen, vorzeichenrichtigen statischen (17) und dynamischen Moments (18), die Summe mit einem Faktor F1 gewichtet und dem Ergebnis eine Konstante hinzugefügt wird, wobei das dynamische Moment eine Funktion einer Sollschaltzeit, einer getriebeeingangsseitig bezogenen Schwungmasse und einer Differenzdrehzahl ist, wobei die Differenzdrehzahl sich aus dem Verhältnis der ersten und zweiten Übersetzung mal der Getriebeausgangsdrehzahl errechnet.

5. Verfahren nach Anspruch 4, dadurch **gekennzeichnet**, daß während der Gradient-Einstellphase (4) das dynamische Moment (18) von Null auf 100 % gesteigert wird, in der Gleitphase (5) bei 100 % verbleibt und in der Gradient-Abbauphase (6) von 100 % auf Null reduziert wird.

6. Verfahren nach Anspruch 2 oder 3, dadurch **gekennzeichnet**, daß der Vorsynchronpunkt bestimmt wird aus einem Differenzdrehzahl-Gradient der zweiten Kupplung, dem aktuellen Differenzdrehzahlwert der zweiten Kupplung (10) und einer ersten Zeitstufe.

7. Verfahren nach Anspruch 2 oder 3, dadurch **gekennzeichnet**, daß die Kenngröße 3 festgelegt ist durch eine zweite Zeitstufe, für den Übergang vom Differenzdrehzahl-Gradient am Vorsynchronpunkt, zum Differenzdrehzahl-Gradient am Synchronpunkt, wobei der Differenzdrehzahl-Gradient und die Differenzdrehzahl am Synchronpunkt Null sind.

8. Verfahren nach Anspruch 1, dadurch **gekennzeichnet**, daß innerhalb der Schließphase (8) der Druck an der zweiten Kupplung (12) rampenförmig erhöht wird, bis der Absolutwert der Differenzdrehzahl der zweiten Kupplung (10) innerhalb einer dritten Zeitstufe kleiner einem Sollwert ist und anschließend die zweite Kupplung (12) mit Hauptdruck beaufschlagt wird.

9. Verfahren nach Anspruch 1, dadurch **gekennzeichnet**, daß eine Zug-/Schub-Unterscheidung aufgrund des Vorzeichens der Summe aus aktuellem statischen (17) und aktuellem dynamischen Moment (18) erfolgt.

10. Verfahren zum Steuern eines von einer Brennkraftmaschine angetriebenen Automatgetriebes in Gruppenbauweise, bei dem eine Schaltung von einem ersten in ein zweites Übersetzungverhaltnis erfolgt, indem im ersten (19) und zweiten Getriebeteil (20) die Schaltrichtungen entgegengesetzt verlaufen, der erste Geriebeteil einen großen Stufensprung und der zweite Getriebeteil einen kleinen Stufensprung aufweist, in jedem Getriebeteil eine erste Kupplung (11) öffnet und eine zweite Kupplung (12) schließt, hierbei ein elektronisches Steuergerät über elektromagnetische Ventile den Beginn der Schaltung und den Druckverlauf der ersten (11 ) und zweiten Kupplung (12) des ersten (19) und zweiten Getriebeteils (20) während des Schaltvorgangs steuert, das elektronische Steuergerät aufgrund von Eingangsgrößen eine erste oder zweite Schaltungsart bestimmt, die erste Schaltungsart eine Hochschaltung im Zug bzw. eine Rückschaltung im Schub ist und die zweite Schaltungsart eine Rückschaltung im Zug bzw. eine Hochschaltung im Schub ist, dadurch **gekennzeichnet**, daß das Automatgetriebe im ersten und zweiten Getriebeteil gleichzeitig geschaltet wird, wobei die Schaltungsvorgänge in den in Anspruch 1 angegebenen Weise ausgeführt werden.

11. Verfahren nach Anspruch 10, dadurch **gekennzeichnet**, einer vorzeichenrichtigen Summe des aktuellen statischen Moments 17, eines dynamischen Moments 18 des ersten Getriebeteils, dieses sich aus einer getriebeeingangsseitigen Differenzdrehzahl, einer Sollschaltzeit der Brennkraftmaschine und einem ersten Massenfaktor berechnet und einem dynamischen Moment 33 des zweiten Getriebeteils, wobei sich dieses aus der Differenzdrehzahl des zweiten Getriebeteils, einer Sollschaltzeit des zweiten Getriebeteils und einem zweiten Massenfaktor berechnet.

12. Verfahren nach Anspruch 11, dadurch **gekennzeichnet**, daß mit Erkennen des Vorsynchronpunktes im zweiten Getriebeteil (20) die Berechnung der Kenngröße 2 übergeht in die Berechnung der Kenngröße 2 gemäß Anspruch 4 für den ersten Getriebeteil (19).

13. Verfahren nach Anspruch 1 oder 10, dadurch **gekennzeichnet**, daß bei einer Hochschaltung im Zug während der Gleitphase ein Motoreingriff ausgeführt wird.

14. Verfahren nach einem der vorausgegangenen Ansprüche, dadurch **gekennzeichnet**, daß während der Gleitphase bei der Berechnung der Kenngröße 2 über den Faktor F1 eine Abweichnung von Soll- zu Istschaltverlauf korrigiert wird.

15. Gruppengetriebe, bei dem das Verfahren nach den Ansprüchen 1 oder 10 verwendet wird.

## Claims

1. Process for controlling an automatic transmission driven by an internal combustion engine, in which a gear change from a first to a second gear ratio is achieved by opening a first clutch (11) and closing a second clutch (12), whereby an electronic control unit controls via solenoid valves the pressure characteristic of the first clutch (11) and second clutch (12) during the gear change process, the electronic control unit determines a first or second type of gear change on the basis of input variables, the first type of gear change is an up-shift under tension or a down-shift under thrust, respectively, and the second type of gear change is a down-shift under tension or an up-shift under thrust, respectively, the gear change processes in both types of gear change being executed so that a filling equalizing phase follows a rapid filling phase followed by a load take-over and closure phase,
characterised in that in the first type of gear change of the load take-over phase (3) a gradient setting phase (4) with sliding phase (5) follows and a gradient breakdown phase (6) precedes the closure phase (8), in the second type of gear change of the filling equalizing phase (2) a gradient setting phase (4) with sliding phase (5) follows and a gradient breakdown phase (6) precedes the load take-over phase (7).

2. Process according to Claim 1, characterised in that in the first type of gear change, during the rapid filling phase (1) high pressure is applied to the second clutch (12) and the pressure of the first clutch (11) is reduced from a first to a second level, whereby the second level is above the slipping threshold of the first clutch (11), in the filling equalizing phase (2) the second clutch (12) is filled to a lower pressure level pF and the pressure of the first clutch (11) remains at the second level, in the load take-over phase (3) the pressure of the second clutch (12) is increased to an end value pE1 = f (characteristic value 1) and the pressure of the first clutch (11) is reduced from the second level to zero, in the gradient setting phase (4) the pressure of the second clutch (12) is increased from the end value pE1 to an end value pE2 = f (characteristic value 2), in the sliding phase (5) the pressure of the second clutch (12) is increased linearly until a pre-synchronization point is detected at said second clutch, in the gradient breakdown phase (6) the pressure of the second clutch (12) is reduced to an end value pE3 = f (characteristic value 3), the closure phase (8) commences when the end value pE3 is reached.

3. Process according to Claim 1, characterised in that in the second type of gear change, during the rapid filling phase (1) high pressure is applied to the second clutch (12) and the pressure of the first clutch (11) is reduced from a first to a second level, whereby the second level is above the slipping threshold of the first clutch (11), in the filling equalizing phase (2) the second clutch (12) is filled to a lower pressure level pF and the pressure of the first clutch (11) remains at the second level, in the gradient setting phase (4) the pressure of the first clutch (11) is reduced to an end value pE4 = f (characteristic value 2), in the sliding phase (5) the pressure of the first clutch (11) is ramped up until a pre-synchronization point is detected at said first clutch, in the gradient breakdown phase (6) the pressure of the first clutch (11) is increased from the ramp end value to an end value pE5 = f (characteristic value 1), in the load take-over phase (7) the pressure of the first clutch (11) is reduced from the end value pE5 to zero and the pressure of the second clutch (12) is increased from the pressure level pF to the end value pE5 and the closure phase (8) commences when the end value pE5 is reached.

4. Process according to Claim 2 or 3, characterised in that the characteristic value 1 is determined from a static torque (17), this being a function of the actual torque generated by the internal combustion engine times a conversion ratio, if a hydrodynamic converter contained in the automatic transmission is operative, the characteristic value 2 is calculated from the sum of the actual correct-sign static torque (17) and dynamic torque (18), the total is weighted by a factor F1 and a constant is added to the result, the dynamic torque being a function of a reference operating time, a rotating mass related to the input side of the transmission and a differential speed, the differential speed being calculated from the ratio of the first and second gear multiplied by the transmission output speed.

5. Process according to Claim 4, characterised in that during the gradient setting phase (4) the dynamic torque (18) is increased from zero to 100 %, but in the sliding phase (5) remains at 100 % and the gradient breakdown phase (6) is reduced from 100 % to zero.

6. Process according to Claim 2 or 3, characterised in that the pre-synchronization point is determined from a differential speed gradient of the second clutch, the actual differential speed value of the second clutch (10) and a first timer.

7. Process according to Claim 2 or 3, characterised in that characteristic value 3 is determined by a second timer for the transition from the differential speed gradient at the pre-synchronization point to the differential speed gradient at the synchronization point, the differential speed gradient and the differential speed being zero at the synchronization point.

8. Process according to Claim 1, characterised in that within the closure phase (8) the pressure at the second clutch (12) is ramped up until the absolute value of the differential speed of the second clutch (10) is less than a reference value within a third timer, and main pressure is then applied to the second clutch (12).

9. Process according to Claim 1, characterised in that a tension/thrust distinction is made on the basis of the sign of the sum of the actual static torque (17) and actual dynamic torque (18).

10. Process for controlling a group type of automatic transmission driven by an internal combustion engine, in which a gear change from a first to a second gear ratio is achieved in that the directions of shift are opposed in the first transmission section (19) and the second transmission section (20), the first transmission section having a large ratio change and the second transmission section having a small ratio change, in each transmission section a first clutch (11) opens and a second clutch (12) closes, whereby during the gear change process an electronic control unit controls via solenoid valves the start of the gear change and the pressure characteristic of the first clutch (11) and second clutch (12) of the first transmission section (19) and second transmission section (20) ; on the basis of input variables the electronic control unit determines a first or second type of gear change, the first type of gear change is an up-shift under tension or a down-shift under thrust, respectively, and the second type of gear change is a down-shift under tension or an up-shift under thrust, characterised in that the automatic transmission is actuated in the first and second transmission sections simultaneously, the gear change processes being implemented in the manner specified in Claim 1.

11. Process according to Claim 10, characterised in that the characteristic value 2 is calculated from a correct-sign sum of the actual static torque 17, and a dynamic torque 18 of the first transmission section, said dynamic torque being calculated from a differential speed at the input of the transmission, a reference operating time of the internal combustion engine and a first rotational inertia coefficient and a dynamic torque 33 of the second transmission section, said dynamic torque being calculated from the differential speed of the second transmission section, a reference operating time of the second transmission section and a second rotational inertia coefficient.

12. Process according to Claim 11, characterised in that on detection of the pre-synchronization point in the second transmission section (20) calculation of characteristic value 2 changes to calculation of characteristic value 2 for the first transmission section (19) according to Claim 4.

13. Process according to Claim 1 or 10, characterised in that engine engagement is effected during the sliding phase with an up-shift under tension.

14. Process according to one of the preceding Claims, characterised in that a deviation between the reference operating characteristic and the actual operating characteristic is corrected via the factor F1 during the sliding phase when characteristic value 2 is being calculated.

15. Group gear, in which the process according to Claims 1 or 10 is employed.

## Revendications

1. Procédé pour commander une boîte de vitesses automatique entraînée par un moteur à combustion, dans lequel une commutation est effectuée d'un premier rapport de changements de vitesse à un deuxième rapport de changements de vitesse du fait qu'un premier embrayage (11) s'ouvre et un deuxième embrayage (12) se ferme, un appareil de commande électronique réglant au moyen de soupapes électromagnétiques l'évolution de la pression du premier (11) et du deuxième (12) embrayage pendant l'opération de commutation, l'appareil de commande électronique déterminant au moyen de grandeurs d'entrée, un premier ou un deuxième mode de changement de vitesse, le premier mode de changement de vitesse étant un changement de vitesse vers le haut en traction, respectivement un changement de vitesse vers le bas en poussée et le deuxième mode de changement de vitesse étant un changement de vitesse vers le bas en traction, respectivement un changement de vitesse vers le haut en poussée, les opérations de changement de vitesse dans les deux modes étant effectuées de telle façon qu'une phase de remplissage rapide est suivie d'une phase de compensation de remplissage, suivie d'une phase de reprise de charge et d'une phase de fermeture, **caractérisé** en ce que dans le premier mode de changement de vitesse, la phase de reprise de charge (3) est suivie d'une phase de réglage du gradient (4) avec une phase de glissement (5), et en ce qu'une phase de dégradation du gradient (6) précède la phase de fermeture (8), dans le deuxième mode de changement de vitesse, la phase de compensation du remplissage (2) étant suivie d'une phase de réglage du gradient (4) avec phase de glissement (5), et en ce que la phase de reprise de charge (7) est précédée d'une phase de dégradation du gradient (6).

2. Procédé selon la revendication 1, **caractérisé** en ce que dans le premier mode de changement de vitesse, pendant la phase de remplissage rapide (1), le deuxième embrayage (12) est soumis à une pression élevée, et en ce que la pression du premier embrayage (11) est abaissée d'un premier à un deuxième niveau, le deuxième niveau se situant au dessus de la limite de glissement du premier embrayage (11), en ce que dans la phase de remplissage rapide (2), le deuxième embrayage (12) est rempli à un niveau de pression bas pF et la pression du premier embrayage (11) demeurant au deuxième niveau, dans la phase de la reprise de charge (3), la pression du deuxième embrayage (12) étant augmentée à une valeur finale pE1 = f (paramètre 1) et la pression du premier embrayage (11) étant abaissée du deuxième niveau jusqu'à zéro, dans la phase du réglage du gradient (4) la pression du deuxième embrayage (12) étant augmentée de la valeur finale pE1 jusqu'à une valeur finale pE2 = f (paramètre 2), dans la phase de glissement (5) la pression du deuxième embrayage est augmentée de façon linéaire jusqu'à ce qu'un point de pré-synchronisation y soit détecté, dans la phase de dégradation du gradient (6) la pression du deuxième embrayage (12) est abaissée à une valeur finale pE3 = f (paramètre 3), et la phase de fermeture (8) commence lorsque la valeur finale pE3 est atteinte.

3. Procédé selon la revendication 1, **caractérisé** en ce que dans le deuxième mode de changement de vitesse, pendant la phase du remplissage rapide (1) le deuxième embrayage (12) est soumis à une pression élevée, et en ce que la pression du premier embrayage (11) est abaissée d'un premier niveau à un deuxième niveau, le deuxième niveau se situant au dessus de la limite du glissement du premier embrayage (11), dans la phase de compensation du remplissage (2), le deuxième embrayage (12) est rempli à un niveau de pression bas pF et la pression du premier embrayage (11) demeure au deuxième niveau, dans la phase de réglage du gradient (4), la pression du premier embrayage (11) est abaissée à une valeur finale pE4 = f (paramètre 2), dans la phase de glissement (5), la pression du premier embrayage (11) est augmentée par paliers jusqu'à ce qu'un point de pré-synchronisation y soit détecté, dans la phase de dégradation du gradient (6) la pression du premier embrayage (11) est augmentée de la valeur finale des paliers jusqu'à une valeur finale pE5 = f (paramètre 1), dans la phase de la reprise de charge (7) la pression du premier embrayage (11) est réduite de la valeur finale pE5 à zéro et la pression du deuxième embrayage (12) est augmentée du niveau de pression pF à la valeur finale pE5, et la phase de fermeture (8) commence lorsque la valeur finale pE3 est atteinte.

4. Procédé selon la revendication 2 ou 3, **caractérisé** en ce que le paramètre 1 est déterminé à partir d'un couple statique (17), lequel est une fonction du couple effectivement fourni par le moteur à combustion multiplié par un rapport de conversion lorsqu'un convertisseur hydrodynamique compris dans la boîte de vitesses automatique est en fonction, le paramètre 2 étant calculé à partir de la somme à indice correct du couple effectif statique (17) et dynamique (18), la somme étant pondérée par un coefficient F1 et une constante étant additionnée au résultat, le couple dynamique étant une fonction d'un temps de changement de vitesse théorique, d'une masse d'inertie se rapportant à l'entrée de l'engrenage et d'une vitesse différentielle, la vitesse différentielle se composant de la relation entre la première et la deuxième transmission multipliée par la vitesse de sortie de l'engrenage.

5. Procédé selon la revendication 4, **caractérisé** en ce que pendant la phase de réglage du gradient (4) le couple dynamique (18) est augmenté de zéro à 100 %, dans la phase de glissement (5) il demeure à 100 % et dans la phase de dégradation du gradient (6) il est abaissé de 100 % à zéro.

6. Procédé selon la revendication 2 ou 3, **caractérisé** en ce que le point de pré-synchronisation est déterminé à partir d'un gradient de la vitesse différentielle du deuxième embrayage, la valeur effective de la vitesse différentielle du deuxième embrayage (10) et d'un palier de temps.

7. Procédé selon la revendication 2 ou 3, **caractérisé** en ce que le paramètre 3 est déterminé par un deuxième palier de temps pour la transition du gradient de la vitesse différentielle au point de pré-synchronisation vers le gradient de la vitesse différentielle sur le point de synchronisation, le gradient de la vitesse différentielle et la vitesse différentielle au point de synchronisation étant nuls.

8. Procédé selon la revendication 1, **caractérisé** en ce qu'au cours de la phase de fermeture (8), la pression sur le deuxième embrayage (12) est augmentée par paliers jusqu'à ce que la valeur absolue de la vitesse différentielle du deuxième embrayage (10) soit inférieure dans un troisième palier de temps à une valeur de consigne, et en ce qu'ensuite, le deuxième embrayage (12) est soumis à la pression principale.

9. Procédé selon la revendication 1, **caractérisé**en ce qu'une distinction traction/poussée est effectuée sur la base de l'indice de la somme composée du couple effectif statique (17) et du couple effectif dynamique (18).

10. Procédé pour commander une boîte de vitesses automatique entraînée par un moteur à combustion conçue comme engrenage en groupe, où une commutation est effectuée d'un premier rapport de changements de vitesse à un deuxième rapport de changements de vitesse dans lequel, dans la première (19) et la deuxième (20) partie de l'engrenage, les directions de commande sont en sens inverse, la première partie de l'engrenage présentant un grand saut de gradation et la deuxième partie un petit saut de gradation, dans chaque partie de l'engrenage un premier embrayage (11) s'ouvre et un deuxième embrayage (12) se ferme, tandis qu'un appareil de commande électronique commande, au moyen de soupapes électromagnétiques, le début du changement de vitesse et l'évolution de la pression du premier (11) et du deuxième (12) embrayage de la première (19) et de la deuxième (20) partie de l'engrenage pendant l'opération du changement de vitesse, l'appareil de commande électronique déterminant sur la base de grandeurs d'entrée, un premier ou un deuxième mode de commutation, le premier mode étant un changement de vitesse vers le haut en traction, respectivement un changement de vitesse vers le bas en poussée et le deuxième mode de commutation étant un changement de vitesse vers le bas en traction, respectivement un changement de vitesse vers le haut en poussée, **caractérisé** en ce que la boîte de vitesses automatique est commandée simultanément dans la première et la deuxième partie de l'engrenage, les opérations du changement de vitesse étant effectuées de la façon indiquée dans la revendication 1.

11. Procédé selon la revendication 10, **caractérisé** en ce que le paramètre 2 est calculé à partir de la somme à indice correct du couple statique effectif 17, d'un couple dynamique 18 de la première partie de l'engrenage, lequel est calculé à partir d'une vitesse différentielle du côté de l'entrée de l'engrenage, d'un temps de manoeuvre théorique et d'un premier coefficient de masse, et un couple dynamique 33 de la deuxième partie de l'engrenage, lequel est calculé à partir de la vitesse différentielle de la deuxième partie de l'engrenage, d'un temps de manoeuvre théorique de la deuxième partie de l'engrenage et d'un deuxième coefficient de masse.

12. Procédé selon la revendication 11, **caractérisé** en ce qu'avec la détection du point de pré-synchronisation dans la deuxième partie de l'engrenage (20), le calcul du paramètre 2 passe dans le calcul du paramètre 2 selon la revendication 4 pour la première partie de l'engrenage (19).

13. Procédé selon la revendication 1 ou 10, **caractérisé** en ce que lors d'un changement de vitesse vers le haut en traction durant la phase de glissement, une intervention par le moteur a lieu.

14. Procédé selon L'une des revendications précédentes, **caractérisé** en ce que durant la phase de glissement, lors du calcul du paramètre 2 au moyen du coefficient F1, un écart du déroulement DE CONSIGNE par rapport au déroulement réel est corrigé

15. Engrenage en groupe pour lequel le procédé selon les revendications 1 ou 10 est utilisé.
